# EUROPÄISCHE PATENTSCHRIFT

(11) **EP 4 067 575 B1**
(45) Veröffentlichungstag und Bekanntmachung des Hinweises auf die Patenterteilung: **31.05.2023**
(21) Anmeldenummer: 22164606.0
(22) Anmeldetag: 28.03.2022
(51) Int. Cl.: E01C 23/088, E01C 23/12, F01P 3/18, F01P 5/02, F01P 5/06, F01P 11/10, B60K 11/02, B60K 11/04

(54) **SELBSTFAHRENDE BODENBEARBEITUNGSMASCHINE MIT KOMBINIERTER WÄRMETAUSCHER-KÜHLUNG UND MOTORRAUMENTLÜFTUNG**
SELF-PROPELLED SOIL WORKING MACHINE WITH COMBINED HEAT EXCHANGER COOLING AND ENGINE ROOM VENTILATION
MACHINE DE TRAITEMENT DU SOL AUTOMOTRICE À REFROIDISSEMENT DE L'ÉCHANGEUR DE CHALEUR ET À AÉRATION DU COMPARTIMENT MOTEUR COMBINÉS

(30) Priorität: 30.03.2021 DE 102021108113
(43) Veröffentlichungstag der Anmeldung: 05.10.2022
(73) Patentinhaber: Wirtgen GmbH, 53578 Windhagen (DE)
(72) Erfinder: Stinner, Tobias, 57645 Nister (DE); Stremel, Viktor, 53819 Neunkirchen-Seelscheid (DE); Mahlberg, Axel, 53773 Hennef (DE); Yanza, Rolf David Pancho, 53117 Bonn (DE)
(74) Vertreter: Ruttensperger Lachnit Trossin Gomoll

(56) Entgegenhaltungen:
- DE-A1-102014 008 749

## Beschreibung

Die vorliegende Erfindung betrifft eine selbstfahrende Bodenbearbeitungsmaschine, wie etwa eine Straßenfräse, insbesondere Straßenkaltfräse, einen Surface-Miner oder einen Stabilisierer. Die Bodenbearbeitungsmaschine umfasst:
- ein Fahrwerk, vermittels welchem die Bodenbearbeitungsmaschine abrollbar auf einem Untergrund aufsteht, und
- einen vom Fahrwerk getragenen Maschinenrahmen,
- eine am Maschinenrahmen aufgenommene Leistungsquelle zur Bereitstellung von Leistung, welche für einen Fahrbetrieb oder/und für einen Bodenbearbeitungsbetrieb der Bodenbearbeitungsmaschine nutzbar ist,
- eine an dem Maschinenrahmen aufgenommene Arbeitsvorrichtung zur Bodenbearbeitung,
- eine Kühlvorrichtung zur Kühlung einer Funktionsvorrichtung der Bodenbearbeitungsmaschine, wobei die Kühlvorrichtung umfasst:
   - wenigstens eine Wärmetauscheranordnung, umfassend wenigstens einen Wärmetauscher, welcher zur Übertragung von Wärme von einem Kühlmedium an Luft ausgebildet ist, und
   - eine Lüfteranordnung, welche einerseits dazu ausgebildet und angeordnet ist, einen die Wärmetauscheranordnung passierenden Kühl-Luftstrom zu erzeugen und welche andererseits dazu ausgebildet und angeordnet ist, im Bereich der Leistungsquelle einen von der Leistungsquelle weg strömenden

Lüftungs-Luftstrom zu erzeugen, wobei die Wärmetauscheranordnung und ein Lüftungsvolumen, in welchem der Lüftungs-Luftstrom von der Leistungsquelle weg strömt, auf der Saugseite der Lüfteranordnung angeordnet sind.

Eine solche Bodenbearbeitungsmaschine in Gestalt einer Straßenfräse ist aus der DE 10 2014 008 749 A1 bekannt. Aus dieser Druckschrift ist im Einzelnen bekannt, zwischen einem Fahrstand und dem Heck einer Straßenkaltfräse sowohl eine Brennkraftmaschine als die Leistungsquelle als auch die eingangs genannte Kühlvorrichtung anzuordnen. Die bekannte Wärmetauscheranordnung umfasst zwei Wärmetauscher, welche zu unterschiedlichen Kühlkreisläufen gehören. In einem ersten Kühlkreislauf läuft ein Kühlmedium zwischen einem Wärmetauscher und der Brennkraftmaschine um und gibt am Wärmetauscher Wärme wieder ab, die das Kühlmedium zuvor an der Brennkraftmaschine aufgenommen hat. In einem zweiten Kühlkreislauf läuft als im Wärmetauscher Wärme abgebendes Kühlmedium ein Hydrauliköl um, welches zum Betrieb von Hydraulikmotoren des Fahrantriebs dient. Die die einzelnen Wärmetauscher passierenden Kühl-Luftströme sind dabei strikt voneinander durch Trennwände getrennt, da aufgrund der Betriebscharakteristik der bekannten Straßenkaltfräse eine in gewissem Umfang komplementäre thermische Belastung des Kühlmediums der Brennkraftmaschine einerseits und des Hydrauliköls andererseits besteht. In einem Fahrbetrieb ohne Bodenbearbeitung sind die Brennkraftmaschine und ihr Kühlmedium thermisch nur wenig belastet, das Hydrauliköl der den Fahrantrieb bildenden Hydraulikmotoren dagegen sehr. In einem Bodenbearbeitungsbetrieb mit, verglichen mit dem zuvor genannten Fahrbetrieb, geringen Fahrgeschwindigkeiten, jedoch mit einer hohen Antriebsleistung der Fräswalze der Straßenkaltfräse, ist das Hydrauliköl thermisch nur wenig belastet, dagegen die Brennkraftmaschine und ihr Kühlmedium sehr. Ein Betrieb mit hoher Antriebsleistung der Fräswalze und gleichzeitig hoher Fahrgeschwindigkeit tritt in der Realität praktisch nicht auf. Dies gilt auch für Ausführungsformen der Bodenbearbeitungsmaschine der vorliegenden Anmeldung, welche bevorzugt einen hydraulikmotorischen Vortrieb und eine Fräswalze als Arbeitsvorrichtung aufweisen.

Dabei lehrt die DE 10 2014 008 749 A1, die Lüfteranordnung sowohl zur Durchströmung der Wärmetauscher mit Kühlluft als auch zum Abzug von Luft aus einem Motorraum zu verwenden. In dem Motorraum ist die Brennkraftmaschine aufgenommen.

Im Einzelnen lehrt die DE 10 2014 008 749 A1 in einer Ausführungsform, die Wärmetauscher und die Brennkraftmaschine auf der Saugseite der Lüfteranordnung anzuordnen, und aus dem Bereich der Brennkraftmaschine abgesaugte Luft, vermischt mit ebenfalls angesaugter Frischluft, saugend durch die Wärmetauscher zu bewegen. Ebenso lehrt die DE 10 2014 008 749 A1 in anderen Ausführungsformen, die Wärmetauscher und die Brennkraftmaschine auf der Druckseite der Lüfteranordnung anzuordnen und von der Lüfteranordnung angesaugte Luft drückend durch die Wärmetauscher und an der Brennkraftmaschine vorbei zu bewegen.

Die erstgenannte technische Lehre hat den Nachteil, dass die durch den Wärmetauscher hindurch bewegte Luft aufgrund der beigemischten erwärmten Luft, die aus dem Bereich der Brennkraftmaschine abgesaugt wurde, eine höhere Temperatur aufweist als die angesaugte reine Frischluft, was am Wärmetauscher die Wärmeabgabe von Kühlmedium an Luft und damit dessen Effizienz reduziert.

Die zweitgenannte technische Lehre hat den einen Nachteil, dass drückend betriebene Lüfter weniger effizient sind als mit gleicher Leistung saugend betriebene Lüfter, und hat den weiteren Nachteil, dass auf der Druckseite insbesondere die drückend zur Brennkraftmaschine hin bewegte Luft entlang von nahezu unkontrollierbaren und unvorhersagbaren Strömungswegen strömt und an beliebigen, häufig auch nachteiligen Orten an der Bodenbearbeitungsmaschine in die Außenumgebung austritt.

Aus der EP 3 081 421 B1 ist eine weitere als Bohranlage ausgebildete Bodenbearbeitungsmaschine, bei welcher eine Brennkraftmaschine als eine Wärmequelle und eine Wärmetauscheranordnung auf der Saugseite der Lüfteranordnung angeordnet sind, und zwar in dem durch die Lüfteranordnung erzeugten Luftstrom hintereinander. Als Folge fördert die Lüfteranordnung von der Brennkraftmaschine erwärmte Luft durch die Wärmetauscheranordnung, was zu den oben beschriebenen Nachteilen führt. Durch die Reihenanordnung befindet sich die Brennkraftmaschine während des gesamten Lüfterbetriebs in einer Umgebung mit erheblichem Unterdruck gegenüber der Atmosphäre. Hierdurch wird überdurchschnittlich viel Schmutz aus der staubbelasteten Baustellenumgebung der bekannten Bodenbearbeitungsmaschine nahezu kontinuierlich zur Brennkraftmaschine gefördert. Die aus der EP 3 081 421 B1 bekannte Lüfteranordnung ist bezüglich einer Längsachse des sie tragenden Lüfterkanals schräg angeordnet, um bei vorgegebenem Kanalquerschnitt eine möglichst große Lüfterfläche erzielen zu können.

Es ist daher Aufgabe der vorliegenden Erfindung, die eingangs genannte Bodenbearbeitungsmaschine unter Ausräumung der zuvor genannten Nachteile zu verbessern.

Diese Aufgabe löst die vorliegende Erfindung an einer eingangs genannten Bodenbearbeitungsmaschine dadurch, dass das Lüftungsvolumen bezogen auf den Kühl-Luftstrom stromabwärts der Wärmetauscheranordnung angeordnet ist, so dass der durch die Lüfteranordnung erzeugte Lüftungs-Luftstrom stromabwärts der Wärmetauscheranordnung und stromaufwärts der Lüfteranordnung auf den Kühl-Luftstrom trifft.

Unter Verwendung der erfindungsgemäßen Anordnung von Wärmetauscheranordnung, Lüfteranordnung und Lüftungsvolumen wird zum einen die Lüfteranordnung saugend betrieben, was nicht nur die effektivste Betriebsart einer Lüfteranordnung ist, sondern was auch eine Möglichkeit sicherstellt, festzulegen, wohin die durch die Wärmetauscheranordnung oder/und durch die Leistungsquelle erwärmte Luft von der Bodenbearbeitungsmaschine weg abgeblasen werden kann.

Zum anderen trifft der aus dem Lüftungsvolumen der Leistungsquelle abgesaugte und von der Leistungsquelle, deren Temperatur sich im Betrieb unvermeidlich erhöht, erwärmte Lüftungs-Luftstrom erst auf den Kühl-Luftstrom, nachdem dieser die Wärmetauscheranordnung passiert hat. Dadurch wird erreicht, dass die Wärmetauscheranordnung von einem möglichst kühlen Luftstrom passiert wird, welcher aufgrund der somit höheren Temperaturdifferenz zwischen dem die Wärmetauscheranordnung durchströmenden Kühlmedium und dem passierenden Luftstrom für einen höheren konvektiven Wärmeabtransport von der Wärmetauscheranordnung sorgt als dies bei einer Beimischung eines erwärmten Lüftungs-Luftstroms der Fall wäre.

Ebenso wird die Leistungsquelle effizient belüftet, da auch der Bereich um die Leistungsquelle herum, also das Lüftungsvolumen, welches an die Leistungsquelle wenigstens angrenzt und die Leistungsquelle bevorzugt wenigstens teilweise umgibt, nicht von Luft umströmt wird, welche zuvor durch eine Wärmeübertragung von der Wärmetauscheranordnung auf die Luft erwärmt wurde.

Folglich kann die Wärmetauscheranordnung effektiv betrieben und kann die sich im Betrieb stets erwärmende Leistungsquelle effektiv belüftet werden.

Ein weiterer Vorteil der Erfindung liegt darin, dass nur ein Teil der gesamten von der Lüfteranordnung geförderten Luftmenge aus dem Lüftungsvolumen nahe der Leistungsquelle angesaugt wird, wodurch der Unterdruck in der Umgebung der Leistungsquelle und damit der Eintrag von Schmutz in diese Umgebung gegenüber dem Stand der Technik gemäß EP 3 081 421 B1 reduziert ist.

Bevorzugt ist der Ausgangspunkt sowohl des Kühl-Luftstroms als auch des Lüftungs-Luftstroms die Außenumgebung und damit die Umgebungsatmosphäre der Bodenbearbeitungsmaschine, ohne dass einer der Luftströme vor dem Erreichen der Wärmetauscheranordnung oder der Leistungsquelle konvektiv Wärme von einer anderen Funktionsvorrichtung aufnimmt. Allenfalls strömt durch die Lüfteranordnung angesaugte Luft durch eine Abdeckung der Wärmetauscheranordnung oder/und eine Abdeckung der Leistungsquelle von der Außenumgebung zur Wärmetauscheranordnung bzw. zur Leistungsquelle hin.

Die Leistungsquelle ist bevorzugt eine Brennkraftmaschine, wobei als Brennkraftmaschine wiederum eine Diesel-Brennkraftmaschine bevorzugt ist. Diesel-Brennkraftmaschinen können stationär mit gutem Wirkungsgrad und niedrigen Emissionen betrieben werden. Es soll jedoch nicht ausgeschlossen sein, dass ein Ottomotor oder eine andere Art von thermischer oder elektrischer Kraftmaschine als Leistungsquelle verwendet wird oder dass die Leistungsquelle eine oder mehrere Brennstoffzellen umfasst. Die Leistungsquelle kann insbesondere eine Brennkraftmaschine mit Turbolader sein. Die Leistungsquelle ist gleichsam ein von der Bodenbearbeitungsmaschine mitgeführtes Kraftwerk, welches für den Betrieb der Bodenbearbeitungsmaschine erforderliche Leistung bereitstellt. Im Falle einer thermischen Kraftmaschine als Leistungsquelle kann die Bodenbearbeitungsmaschine in an sich bekannter Weise einen oder mehrere Leistungswandler umfassen, welche die von der Leistungsquelle in einer Form bereitgestellte Leistung in eine in anderer Form bereitgestellte Leistung umwandeln. So kann beispielsweise die Arbeitsvorrichtung zur Bodenbearbeitung von einem mechanischen Ausgabeglied der Leistungsquelle, wie einer Kurbelwelle, unter Zwischenschaltung von Getrieben mechanisch angetrieben werden. Ebenso kann, beispielsweise über eine Nebenabtriebswelle eines solchen Getriebes, insbesondere eines Pumpenverteilergetriebes, eine Hydraulikpumpe betrieben werden, welche die von der Leistungsquelle bereitgestellte Leistung in potentielle Energie in Form eines erhöhten Druckniveaus eines Hydrauliköls wandelt. Weiterhin kann Leistung der Leistungsquelle über einen Generator von mechanischer Leistung in elektrische Leistung umgewandelt werden.

Gemäß einer stärker verallgemeinerten Lehre der vorliegenden Erfindung kann anstelle der Leistungsquelle eine gesondert von der Wärmetauscheranordnung, und bevorzugt mit Abstand von dieser, eine Wärmequelle angeordnet sein, von welcher wegführend die Lüfteranordnung im Betrieb einen Lüftungs-Luftstrom erzeugt, um die Wärmequelle zu belüften. Es gilt für die Wärmequelle, die beispielsweise eine elektrische Energiespeicheranordnung oder ein Getriebe sein kann, das in vorliegender Anmeldung zur Leistungsquelle Gesagte.

Die Arbeitsvorrichtung zur Bodenbearbeitung ist bevorzugt eine bodenabtragende Arbeitsvorrichtung. Dabei ist bevorzugt an eine rotierende Arbeitsvorrichtung mit geometrisch bestimmten Schneiden, wie etwa an eine Fräswalze, oder/und mit geometrisch unbestimmte Schneiden, wie beispielsweise an eine sogenannte "Grinding-Walze" zur gezielten Texturierung von Bodenoberflächen gedacht.

Ein "Passieren" der Wärmetauscheranordnung durch den Kühl-Luftstrom bezeichnet vorliegend jede Art von Strömung des Kühl-Luftstroms an der Wärmetauscheranordnung vorbei unter konvektiver Abführung von Wärme von der Wärmetauscheranordnung durch den Kühl-Luftstrom. Beim Passieren der Wärmetauscheranordnung kann der Kühl-Luftstrom im Gleich- oder Gegenstrom entlang einer Wärmeübertragungsfläche der Wärmetauscheranordnung bezogen auf die Strömungsrichtung eines auf der anderen Seite der Wärmeübertragungsfläche strömenden Kühlmediums gleichgerichtet bzw. entgegengesetzt gerichtet strömen. Bevorzugt ist die Wärmetauscheranordnung eine Kreuzstrom-Wärmetauscheranordnung, bei welcher der Kühl-Luftstrom quer zur Strömungsrichtung des die Wärmetauscheranordnung durchströmenden Kühlmediums strömt. Die Wärmetauscheranordnung kann den Kühl-Luftstrom führende Kühlkanäle zur Durchströmung mit dem Kühl-Luftstrom aufweisen.

Grundsätzlich kann daran gedacht sein, dass der Kühl-Luftstrom einerseits und der Lüftungs-Luftstrom andererseits getrennt voneinander durch die Lüfteranordnung angesaugt und nach Durchgang durch die Lüfteranordnung in die Außenumgebung abgeblasen werden. Allerdings erfordert eine konsequente Trennung der beiden Luftströme die Einrichtung entsprechender Strömungskanäle, was einen erhöhten Aufwand darstellt und was zu einer komplizierten Strömungsführung führt, wenn stets die gesamte Wärmetauscheranordnung für den Kühl-Luftstrom durchströmbar sein soll. Erhöhter Aufwand und erhöhte Komplexität erhöhen die Störungsanfälligkeit. Bevorzugt ist daher, dass zwischen der Wärmetauscheranordnung und der Lüfteranordnung ein Mischvolumen vorgesehen ist, in welchem sich der Kühl-Luftstrom und der Lüftungs-Luftstrom vermischen. Zu dem Zeitpunkt, zu dem sich der Kühl-Luftstrom und der Lüftungs-Luftstrom vermischen, haben Sie als konvektive Luftströme ihre Aufgabe der Wärmeabführung bereits erfüllt und können, ohne Beeinträchtigungen von Wirkungsgraden befürchten zu müssen, gemeinsam und vermischt als Abluft durch die Lüfteranordnung hindurch auf deren Druckseite gefördert und bevorzugt in die Außenumgebung abgeblasen werden.

Es kann daran gedacht sein, die Abluft stromaufwärts oder stromabwärts der Lüfteranordnung zu filtern, also im Strömungsweg der Abluft einen von der Abluft durchströmten Luftfilter anzuordnen. Da in der Regel nur Luft aus der Außenumgebung angesaugt und als Kühl-Luftstrom den Wärmetauscher passierend gefördert wird bzw. nur Luft aus dem Bereich der Leistungsquelle abgesaugt wird, für welche in der Regel Luft aus der Außenumgebung nachströmt, hält sich der Verschmutzungsgrad der beiden Luftströme in Grenzen, sodass weder zum Schutz der ohnehin robusten Lüfteranordnung noch zur Reinigung der Abluft eine Filterung der Luftströme nötig ist.

Zu Erleichterung der Montage der Bodenbearbeitungsmaschine kann die Bodenbearbeitungsmaschine, insbesondere deren Kühlvorrichtung, eine vormontierte Luftstrom-Baugruppe aufweisen, wobei die Luftstrom-Baugruppe die Lüfteranordnung, die Wärmetauscheranordnung und einen die Lüfteranordnung und die Wärmetauscheranordnung tragenden Rahmen aufweist. Die Luftstrom-Baugruppe kann so einfach an einem gesonderten Montageplatz vormontiert und als vormontierte Baugruppe an der Bodenbearbeitungsmaschine, insbesondere an deren Maschinenrahmen, befestigt werden.

Der Rahmen kann ein Fachwerkrahmen mit einer Mehrzahl von Stäben sein, an welchen die Lüfteranordnung und die Wärmetauscheranordnung gehaltert sind. Ein skelettartiger Fachwerkrahmen weist ein verhältnismäßig geringes Gewicht auf. Um definierte Strömungsbedingungen zu erzwingen, kann der Rahmen einen das Mischvolumen wenigstens teilweise einfassenden Gehäuseabschnitt aufweisen. Der Rahmen kann hierzu eine Rahmenhaut aufweisen und zu diesem Zweck beispielsweise wenigstens abschnittsweise aus Blech oder/und Kunststoffflächen gebaut oder/und geformt sein. So kann sichergestellt sein, dass von der Lüfteranordnung tatsächlich nur oder weitaus überwiegend der die Wärmetauscheranordnung passierende Kühl-Luftstrom und der von der Leistungsquelle abgezogene Lüftungs-Luftstrom, jedoch keine Falschluft aus anderen Bereichen der Bodenbearbeitungsmaschine angesaugt wird. So kann verhindert werden, dass die Lüfteranordnung Luft aus Bereichen der Bodenbearbeitungsmaschine ansaugt, die keine konvektive Kühlung oder/und keine Entlüftung benötigen.

Damit der Kühl-Luftstrom und der Lüftungs-Luftstrom stromaufwärts der Lüfteranordnung, aber stromabwärts der Wärmetauscheranordnung aufeinandertreffen und sich bevorzugt vermischen können, ist es vorteilhaft, wenn die Lüfteranordnung mit Abstand von der Wärmetauscheranordnung angeordnet ist. Eine besonders gute Raumausnutzung ergibt sich dann, wenn die Lüfteranordnung und die Wärmetauscheranordnung relativ zueinander um eine Schwenkachse rotatorisch verlagert sind. Dann haben unterschiedliche Bereiche der Lüfteranordnung einerseits und der Wärmetauscheranordnung andererseits unterschiedliche Abstände voneinander. Dafür sind die Strömungswege von der Wärmetauscheranordnung zur Lüfteranordnung kurz. Zusätzlich oder alternativ können die Lüfteranordnung und die Wärmetauscheranordnung längs einer Verlagerungsachse translatorisch verlagert angeordnet sein. Die translatorische Verlagerung von Wärmetauscheranordnung und Lüfteranordnung erfordert jedoch in der Regel mehr Einbauraum als eine rotatorische Verlagerung.

Zur vorteilhaften Verringerung des Bedarfs an Einbauraum ist die Lüfteranordnung bevorzugt eine im Wesentlichen ebene Lüfteranordnung. Dabei ist "eben" nicht streng mathematisch zu verstehen, sondern derart, dass die Lüfteranordnung in zwei zueinander orthogonalen Raumrichtungen erheblich größere Abmessungen aufweist als in einer zu den genannten Raumrichtungen orthogonalen dritten Raumrichtung, welche besonders bevorzugt die Durchströmungsrichtung der Lüfteranordnung ist, längs welcher die Abluft die Lüfteranordnung durchströmt. Längs der dritten Raumrichtung verläuft bevorzugt eine Rotationsachse wenigstens eines Lüfters der Lüfteranordnung, vorzugsweise, falls die Lüfteranordnung mehrere Lüfter umfasst, alle Rotationsachsen der mehreren Lüfter. Alternativ oder bevorzugt zusätzlich ist auch die Wärmetauscheranordnung eine im Wesentlichen ebene Wärmetauscheranordnung. Auch dies bedeutet, dass die Wärmetauscheranordnung längs zweier zueinander orthogonalen Raumrichtungen jeweils eine wesentlich größere Abmessung aufweist als in einer zu den beiden Raumrichtungen orthogonalen dritten Raumrichtung, welche bevorzugt eine Durchströmungsrichtung ist, längs welcher der Kühl-Luftstrom die bevorzugt als Kreuzstrom-Wärmetauscheranordnung ausgebildete Wärmetauscheranordnung durchströmt.

Dann, wenn sowohl die Wärmetauscheranordnung als auch die Lüfteranordnung jeweils als ebene Anordnungen ausgebildet sind, verläuft bevorzugt die Schwenkachse, um welche die beiden Anordnungen relativ zueinander rotatorisch verlagert sind, parallel zu jeder Ausbildungsebene der beiden Anordnungen.

Die durchströmbare Fläche der Wärmetauscheranordnung ist vorzugsweise größer als die durchströmbare Fläche der Lüfteranordnung, sodass an der Wärmetauscheranordnung eine möglichst große Wärmeübertragungsfläche bereitgestellt sein kann. Die durchströmbare Fläche eines Lüfters der Lüfteranordnung ist bevorzugt kreisförmig oder ringförmig, damit sich diese möglichst eng an ein rotierendes Lüfterrad an nähern kann. Falls die Lüfteranordnung mehrere Lüfter aufweist, ist bevorzugt jede durchströmbare Fläche eines Lüfters kreisförmig oder ringförmig.

Zur möglichst guten Ausnutzung des zur Anbringung der Wärmetauscheranordnung bereitgestellten Einbauraums ist die durchströmbare Fläche der Wärmetauscheranordnung bevorzugt rechteckig.

Dann, wenn die Lüfteranordnung und die Wärmetauscheranordnung um die Schwenkachse relativ zueinander rotatorisch verlagert sind, beträgt bevorzugt der rotatorische Verlagerungswinkel zwischen 65° und 115°, besonders bevorzugt zwischen 80° und 100°. Durch diese Abwinkelung der beiden Anordnungen relativ zueinander um einen Verlagerungswinkel in einem Winkelbereich um einen rechten Winkel herum können über einer verhältnismäßig geringen Grundfläche dennoch eine Wärmetauscheranordnung und eine Lüfteranordnung mit jeweils verhältnismäßig großen durchströmbaren Flächen angeordnet werden. Die oben genannte Luftstrom-Baugruppe kann dann eine grob prismatische Form aufweisen, beispielsweise mit einem Mischvolumen mit im Wesentlichen dreieckiger Grundform, wobei das Mischvolumen längs einer Seite durch die Lüfteranordnung, längs einer zweiten Seite durch die Wärmetauscheranordnung und längs einer dritten Seite durch eine Wand des den Gehäuseabschnitt ausbildenden Rahmens gebildet sein kann.

Die Lüfteranordnung und die Wärmetauscheranordnung können dann räumlich sehr kompakt, insbesondere als sehr kompakte Luftstrom-Baugruppe, an der Bodenbearbeitungsmaschine angeordnet werden, wenn der Lüftungs-Luftstrom quer zur Strömungsrichtung des die Wärmetauscheranordnung passierenden Kühl-Luftstroms oder/und quer zu einem die Lüfteranordnung durchströmenden Abluftstrom zum Mischvolumen hin strömt. Im Falle der oben beispielhaft genannten grob prismatischen Luftstrom-Baugruppe können somit zwei Luftströme, bevorzugt der Kühl-Luftstrom und der Abluftstrom, durch die Mantelfläche der grob prismatischen Luftstrom-Baugruppe strömen und kann ein Luftstrom, bevorzugt der Lüftungs-Luftstrom, durch eine Stirnfläche der grob prismatischen Luftstrom-Baugruppe strömen.

Beispielsweise kann der das Mischvolumen wenigstens teilweise einfassende Gehäuseabschnitt des Rahmens eine mit Abstand sowohl von der Wärmetauscheranordnung als auch von der Lüfteranordnung gelegene Durchgangsöffnung aufweisen, welche vom Lüftungs-Luftstrom durchströmbar ist. Wie zuvor dargelegt wurde, ist bevorzugt der die Durchgangsöffnung aufweisende Gehäuseabschnitt Teil einer Stirnwand einer prismatischen Luftstrom-Baugruppe.

Grundsätzlich kann diese Durchgangsöffnung einen unveränderlichen Querschnitt aufweisen, dessen Gestalt oder/und Größe oder/und Lage durch entsprechende Versuche optimiert werden kann bzw. können. Es kann jedoch auch daran gedacht sein, zur Anpassung der Belüftung der Leistungsquelle, beispielsweise abhängig von ihrem Betriebszustand, eine vom Lüftungs-Luftstrom durchströmbare Querschnittsfläche der Durchgangsöffnung zur Veränderung der unter gegebenen Betriebsbedingungen pro Zeiteinheit im Lüftungs-Luftstrom strömenden Lüftungs-Luftmenge veränderbar auszugestalten. Hierzu kann beispielsweise die Durchgangsöffnung eine Blendenvorrichtung aufweisen, mit welcher durch Verlagerung eines Blendenbauteils relativ zu einem die Durchgangsöffnung ausbildenden Bauteil eine Überdeckung der Durchgangsöffnung durch das Blendenbauteils aktuatorisch veränderbar ist. Wenn die Durchgangsöffnung an einem Gehäuseabschnitt des Rahmens der Luftstrom-Baugruppe ausgebildet ist, ist bevorzugt auch die Blendenvorrichtung, insbesondere das relativ zur Durchgangsöffnung bewegliche Blendenbauteil, an dem Rahmen, insbesondere an dem Gehäuseabschnitt des Rahmens, der Luftstrom-Baugruppe aufgenommen.

Im Betrieb der Bodenbearbeitungsmaschine ist in der Regel die pro Zeiteinheit benötigte Kühl-Luftmenge größer, sogar häufig deutlich größer, als die in derselben Zeiteinheit benötigte Lüftungs-Luftmenge. Ein Großteil der von der Lüfteranordnung geförderten Luftmenge strömt also durch die Wärmetauscheranordnung. Der Lüftungs-Luftstrom dient zumeist nur der Belüftung der Leistungsquelle, um in deren Umgebung einen Wärmestau zu vermeiden. Der Kühl-Luftstrom dient dagegen in der Regel der gezielten Abführung einer Wärmemenge, um während des Betriebs der Bodenbearbeitungsmaschine in der durch die Wärmetauscheranordnung gekühlten wenigstens einen Funktionsvorrichtung ein thermisches Gleichgewicht aufrecht zu erhalten.

Die Wärmetauscheranordnung kann eine Mehrzahl von Wärmetauschern aufweisen, welche bevorzugt Bestandteile unterschiedlicher Kühlkreisläufe oder/und Kühldurchläufe zur Kühlung von Funktionsvorrichtungen an der Bodenbearbeitungsmaschine sind. Dann kann vorteilhaft das jeweilige Kühlmedium unterschiedlicher Kühlkreisläufe oder/und Kühldurchläufe an ein und demselben Ort konvektiv gekühlt werden. Beispielsweise kann ein Kühlkreislauf zwischen einem Wärmetauscher und der Leistungsquelle verlaufen, ein Kühlkreislauf kann zwischen einem Wärmetauscher und einem Hydrauliköltank verlaufen oder ein Wärmetauscher kann als Ölkühler von Hydrauliköl als dem Wärme abgebenden Kühlmedium durchströmt werden. In einem Kühldurchlauf kann ein Wärmetauscher als Gas-Gas-Ladeluftkühler eines Turboladers dienen. In einem Kühlkreislauf kann ein Wärmetauscher Teil eines Gas-Flüssigkeit-Ladeluftkühlers eines Turboladers sein. Ebenso kann ein Wärmetauscher in einem Kühlkreislauf ein Getriebeölkühler sein. Unterschiedliche Wärmetauscher können also durch unterschiedliche Kühlmedien durchströmt sein. Zwei oder mehr Wärmetauscher können auch vom gleichen Kühlmedium durchströmt sein, welches jedoch in voneinander gesonderten Kühlkreisläufen umläuft oder/und in voneinander gesonderten Kühldurchläufen durchläuft.

Ebenso kann die Lüfteranordnung eine Mehrzahl von Lüftern aufweisen, um gegebenenfalls unterschiedlich starke Luftströme in unterschiedlichen Bereichen der Lüfteranordnung und insbesondere des Mischvolumens zu erzeugen. Dies kann dann von Vorteil sein, wenn ein Wärmetauscher aus einer Mehrzahl von Wärmetauschern eine höhere konvektive Kühlleistung benötigt als andere Wärmetauscher der Wärmetauscheranordnung. Bevorzugt sind die Lüfter der Lüfteranordnung gesondert voneinander steuerbar, sodass gleichzeitig mengenmäßig unterschiedliche Luftströme durch die einzelnen Lüfter erzeugt werden können.

Die Bodenbearbeitungsmaschine weist bevorzugt einen Fahrstand auf, von welchem aus der Betrieb der Bodenbearbeitungsmaschine gesteuert werden kann, und zwar unabhängig davon, ob es sich um einen überwiegenden Fahrbetrieb ohne Bodenbearbeitung oder um einen überwiegenden Bearbeitungsbetrieb mit nur geringer Fahrleistung handelt. Die Wärmetauscheranordnung und die Lüfteranordnung können dann zwischen dem Fahrstand und dem vorderen Längsende der Bodenbearbeitungsmaschine angeordnet sein, sodass die vorstehend beschriebene vorteilhafte Kühlvorrichtung auch an Kompaktfräsen eingesetzt werden kann, deren als Fräswalze ausgebildete Arbeitsvorrichtung im Bereich des Hecks der Bodenbearbeitungsmaschine, insbesondere unter oder/und hinter dem Fahrstand angeordnet ist.

Grundsätzlich kann daran gedacht sein, eine den Lüftungs-Luftstrom führende Lüftungsleitung von der Leistungsquelle zur Kühlvorrichtung zu verlegen. Eine solche Lüftungsleitung definiert dann einen Teil des Lüftungsvolumens. Dies bedeutet jedoch in der Regel eine Erhöhung des Strömungswiderstands für den Lüftungs-Luftstrom und einen zusätzlichen Montageaufwand. Bevorzugt sind daher die Wärmetauscheranordnung und die Lüfteranordnung der Leistungsquelle unmittelbar benachbart angeordnet. Besonders bevorzugt befindet sich zwischen der Leistungsquelle und der Kühlvorrichtung, insbesondere der Luftstrom-Baugruppe, keine weitere Funktionsvorrichtung, sodass die Lüfteranordnung Luft unmittelbar dem Lüftungsvolumen als Lüftungs-Luftstrom ansaugen kann. Gemäß dieser bevorzugten Ausgestaltung kann das Lüftungsvolumen ohne Ausbildung einer kanalförmigen Leitung einerseits an die Leistungsquelle angrenzen und diese sogar wenigstens teilweise umgeben, und kann das Lüftungsvolumen anderseits an die Durchgangsöffnung zum Mischvolumen angrenzen.

Zur Vermeidung von Beeinträchtigungen des Maschinenführers auf einem in Vorwärtsfahrtrichtung der Leistungsquelle nacheilenden Fahrstand ist bevorzugt, dass die Wärmetauscheranordnung in Maschinenquerrichtung näher bei einer Seite der Bodenbearbeitungsmaschine gelegen ist und dass die Lüfteranordnung näher bei der in Maschinenquerrichtung entgegengesetzten anderen Seite gelegen. Dadurch kann insbesondere ein Abluft-Luftstrom mit einer Strömungskomponente in Maschinenquerrichtung seitlich von der Bodenbearbeitungsmaschine abgeblasen werden. Der Fahrstand durchfährt dann bei Vorwärtsfahrt den Abluft-Luftstrom nicht.

Der Fahrstand ist zur besseren Beobachtbarkeit der Bodenbearbeitung bevorzugt seitlich, also in Maschinenquerrichtung, zur Mittellängsachse der Maschine versetzt angeordnet. Zur Vermeidung einer Belastung des Fahrstands mit dem Abluft-Strom befindet sich dessen Abblasort bevorzugt näher bei, besonders bevorzugt an jener der beiden Seiten der Bodenbearbeitungsmaschine, von welcher der Fahrstand weg versetzt angeordnet ist. Mit anderen Worten: bevorzugt befindet sich der Abblasort näher bei, insbesondere an jener der beiden Seiten der Bodenbearbeitungsmaschine, von welcher der Fahrstand weiter entfernt ist.

Die bevorzugt rotatorisch relativ zueinander verlagerten Anordnungen: Lüfteranordnung und Wärmetauscheranordnung, können einen First bilden, wobei die Firstlinie ebenfalls bevorzugt parallel zur Maschinenlängsachse verläuft.

Mit anderen Worten kann eine Belastung des Fahrstands durch den Betrieb der Kühlvorrichtung dadurch vermieden werden, dass der die Wärmetauscheranordnung passierende Kühl-Luftstrom eine Strömungskomponente in Maschinenquerrichtung und einer Strömungskomponente in Maschinenhöhenrichtung aufweist oder/und dass ein die Lüfteranordnung durchströmender Abluft-Luftstrom eine Strömungskomponente in Maschinenquerrichtung und einer Strömungskomponente in Maschinenhöhenrichtung aufweist. Aufgrund der oben beschriebenen bevorzugten firstbildenden Anordnung von Wärmetauscheranordnung und Lüfteranordnung, was insbesondere durch die oben beschriebene grob prismatische Gestalt der Luftstrom-Baugruppe erreicht werden kann, sind bevorzugt die in Maschinenhöhenrichtung verlaufenden Strömungskomponenten des Kühl-Luftstroms einerseits und des Abluft-Luftstroms andererseits entgegengesetzt gerichtet. Die Strömungskomponenten in Maschinenquerrichtung sind dagegen bevorzugt gleichgerichtet. Der Lüftungs-Luftstrom strömt dann bevorzugt längs der Maschinenlängsachse in das Mischvolumen der Kühlvorrichtung ein.

Zum Schutz vor äußeren Einflüssen kann die Wärmetauscheranordnung oder/und die Lüfteranordnung oder/und die Leistungsquelle durch eine Abdeckung abgedeckt sein. Die Abdeckung weist bevorzugt Öffnungen auf, um die Zugänglichkeit der Kühlvorrichtung oder/und der Leistungsquelle für Umgebungsluft zu gewährleisten.

An eine zur Abdeckung der Wärmetauscheranordnung hinweisende Seite der Wärmetauscheranordnung kann im betriebsbereiten Zustand der Bodenbearbeitungsmaschine eine Trennvorrichtung anliegen, welche einen Strömungsweg von durchströmbaren Öffnungen in der Abdeckung zur Wärmetauscheranordnung in wenigstens einer Richtung quer zum Strömungsweg von der Umgebung des Strömungswegs abgrenzt. Die Trennvorrichtung reicht bevorzugt von der Abdeckung bis zur Wärmetauscheranordnung. Bevorzugt ist die Trennvorrichtung eine geschlossen um den Strömungsweg umlaufende Schachtwandung, welche einen von ihr umgebenen Schacht als Strömungsweg oder Strömungskanal von der außerhalb der Schachtwandung gelegenen Umgebung abgrenzt. Hierdurch kann im Wesentlichen sichergestellt sein, dass stromaufwärts der Wärmetauscheranordnung nur Umgebungsluft aus der Außenumgebung der Bodenbearbeitungsmaschine als Kühl-Luftstrom angesaugt wird.

Die Trennvorrichtung ist bevorzugt zur gemeinsamen Bewegung mit der Abdeckung verbunden, so dass mit der Abdeckung auch die Trennvorrichtung von der Kühlvorrichtung entfernt wird und die Kühlvorrichtung, insbesondere die im Betrieb durch die Trennvorrichtung gegen Falschluft abgeschirmte Wärmetauscheranordnung, mit wenigen Handgriffen zugänglich gemacht werden kann.

Die Trennvorrichtung kann unter Zwischenanordnung einer Dichtungsanordnung, etwa einer um den Strömungsweg umlaufenden elastomeren Dichtung, an der zur Abdeckung hinweisenden Seite der Wärmetauscheranordnung anliegen. Die Dichtungsanordnung kann geschäumt, offen- oder geschlossenzellig, oder massiv sein.

Die zur Abdeckung hinweisende Seite der Wärmetauscheranordnung kann eine Anlagefläche, vorzugsweise einen eine vom Kühl-Luftstrom durchströmbare Fläche umgebenden Anlagerahmen aufweisen. Die Trennvorrichtung kann dann im betriebsbereiten Zustand der Bodenbearbeitungsmaschine, vorzugsweise unter Zwischenanordnung der Dichtungsanordnung, an der Anlagefläche anliegen.

Die Dichtungsanordnung kann fest mit der Wärmetauscheranordnung oder mit der Trennvorrichtung verbunden sein. Die Dichtungsanordnung kann Teil-Dichtungsanordnungen umfassen, von welchen jede mit einer anderen Struktur aus Wärmetauscheranordnung und Trennvorrichtung fest verbunden ist.

Damit eine gute Durchmischung des Kühl-Luftstroms und des Lüftungs-Luftstroms möglich ist und somit die Lüfteranordnung durch die sie durchströmende Abluft thermisch homogen belastet wird, ist das Mischvolumen bevorzugt größer als das von der Wärmetauscheranordnung eingenommene Volumen. Aufgrund der häufig komplexen Struktur einer Wärmetauscheranordnung soll zur Ermittlung ihres Volumens das von einer die Wärmetauscheranordnung anschmiegend einhüllenden Hüllfläche umschriebene Volumen ausreichen.

Bezogen auf das tatsächlich vom Kühl-Luftstrom durchströmbare Volumen der Wärmetauscheranordnung weist das Mischvolumen bevorzugt wenigstens das Doppelte, besonders bevorzugt wenigstens das Dreifache des durchströmbaren Volumens der Wärmetauscheranordnung auf, so dass sich der Kühl-Luftstrom nach Durchgang durch die Wärmetauscheranordnung ausreichend mit dem Lüftungs-Luftstrom vermischen kann.

Zur Reinigung der Kühlvorrichtung kann die Lüfteranordnung dazu ausgebildet sein, die Drehrichtung wenigstens eines Lüfters, vorzugsweise aller Lüfter, für einen zwischenzeitlichen Reinigungsbetrieb gegenüber dem herkömmlichen Kühlbetrieb kurzzeitig umzukehren. In dem Reinigungsbetrieb fördert die Lüfteranordnung Luft durch die Lüfteranordnung hindurch in das Mischvolumen hinein. So kann die Lüfteranordnung im Reinigungsbetrieb die Wärmetauscheranordnung und/oder eine Abdeckung der Wärmetauscheranordnung von Staub und sonstigen Verunreinigungen befreien, die sich vor allem auf der der Außenumgebung der Bodenbearbeitungsmaschine zugewandten Seite der Wärmetauscheranordnung ablagern können.

Ein im Reinigungsbetrieb erzeugter Reinigungs-Luftstrom, welcher die Lüfteranordnung in entgegengesetzter Richtung wie der Abluft-Luftstrom durchströmt, kann besonders effizient genutzt werden, wenn wie oben dargestellt, eine verschließbare Durchgangsöffnung zwischen Mischvolumen und Lüftungsvolumen vorgesehen ist. Bei verschlossener Durchgangsöffnung kann dann der gesamte Reinigungs-Luftstrom durch die Wärmetauscheranordnung geleitet werden und diese reinigen.

Für den während eines Bodenbearbeitungsbetriebs oder eines Fahrbetriebs ausgeführten bestimmungsgemäßen Kühlbetrieb der Kühlvorrichtung gilt das oben Gesagte: die Lüfteranordnung erzeugt einen Kühl-Luftstrom und einen Lüftungs-Luftstrom, welche zur Lüfteranordnung hin strömen, und bläst den Kühl-Luftstrom und den Lüftungs-Luftstrom als Abluft-Luftstrom durch die Lüfteranordnung ab.

Wenngleich bevorzugt die Wärmetauscheranordnung die einzige vom Kühl-Luftstrom passierte Wärmeübertragungsvorrichtung ist und die Leistungsquelle, gegebenenfalls mit daran angeordneten Zusatzaggregaten, wie einem Turbolader, die einzige Wärmequelle des aus ihrer Umgebung abgesaugten Lüftungs-Luftstroms ist, soll grundsätzlich nicht ausgeschlossen sein, dass der Kühl-Luftstrom, nachdem er die Wärmetauscheranordnung passiert hat oder/und der Lüftungs-Luftstrom, nachdem er sich ausreichend von der Leitungsquelle entfernt hat, eine weitere Wärmeübertragungsvorrichtung passiert bzw. passieren und von dieser Wärme aufnimmt bzw. aufnehmen. Entscheidend ist, dass durch die weitere Wärmeübertragungsvorrichtung keine Luft erwärmt wird, die noch die Wärmetauscheranordnung passieren muss oder/und die in die Umgebung der Leistungsquelle strömt und dort Wärme an die Leistungsquelle abgibt oder eine Wärmeübertragung von der Leistungsquelle weg zu der die Leistungsquelle umgebenden Luft behindert. Ziel der vorliegenden Erfindung ist nämlich, dass die Wärmetauscheranordnung von nicht zusätzlich erwärmter Umgebungsluft passiert werden kann und dass die Leistungsquelle durch nicht zusätzlich erwärmte Umgebungsluft belüftet werden kann. Unvermeidliche Wärmequellen, wie der Durchgang von Umgebungsluft durch eine aufgeheizte Abdeckung oder Hülle der Bodenbearbeitungsmaschine, bleiben dabei außer Betracht. Somit kann beispielsweise bezogen auf den Kühl-Luftstrom stromabwärts der Wärmetauscheranordnung eine weitere vom Kühl-Luftstrom oder/und vom Lüftungs-Luftstrom passierte Wärmeübertragungsvorrichtung angeordnet sein, etwa im Mischvolumen. Zusätzlich oder alternativ kann bezogen auf den Lüftungs-Luftstrom stromabwärts der Leistungsquelle eine weitere vom Kühl-Luftstrom oder/und vom Lüftungs-Luftstrom passierte Wärmeübertragungsvorrichtung angeordnet sein, etwa im Mischvolumen, in der Durchgangsöffnung oder unmittelbar vor oder hinter der Durchgangsöffnung. Die Durchgangsöffnung kann eine Einlass- oder eine Auslassblende für die weitere Wärmeübertragungsvorrichtung sein. Die Anordnung einer weiteren Wärmeübertragungsvorrichtung im Lüftungs-Luftstrom ändert nichts daran, dass der Lüftungs-Luftstrom, wie angegeben, stromabwärts der Wärmetauscheranordnung und stromaufwärts der Lüfteranordnung auf den Kühl-Luftstrom trifft. Die weitere Wärmeübertragungsvorrichtung kann als aktive Wärmeübertragungsvorrichtung von einem wärmeabgebenden Medium durchströmt sein oder kann ein wärmeleitender Kühlkörper sein, welcher mit einem zu kühlenden Bauteil wärmeleitend verbunden ist.

Die vorliegende Erfindung wird nachfolgend anhand der beiliegenden Zeichnungen näher erläutert werden. Es stellt dar:
- Fig. 1: eine perspektivische Ansicht einer Kompaktfräse von schräg hinten,
- Fig. 2: die perspektivische Ansicht der Kompaktfräse von Figur 1 ohne Abdeckung,
- Fig. 3: eine perspektivische Ansicht der Luftstrom-Baugruppe der Kühlvorrichtung der Kompaktfräse der Figuren 1 und 2, und
- Fig. 4: eine seitliche Ansicht der Luftstrom-Baugruppe von Figur 3.

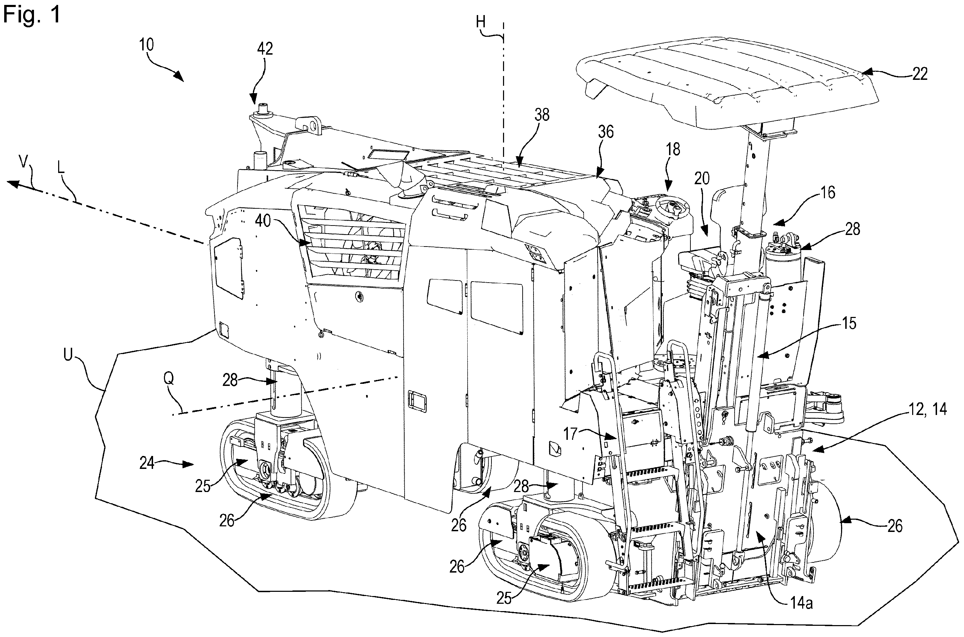

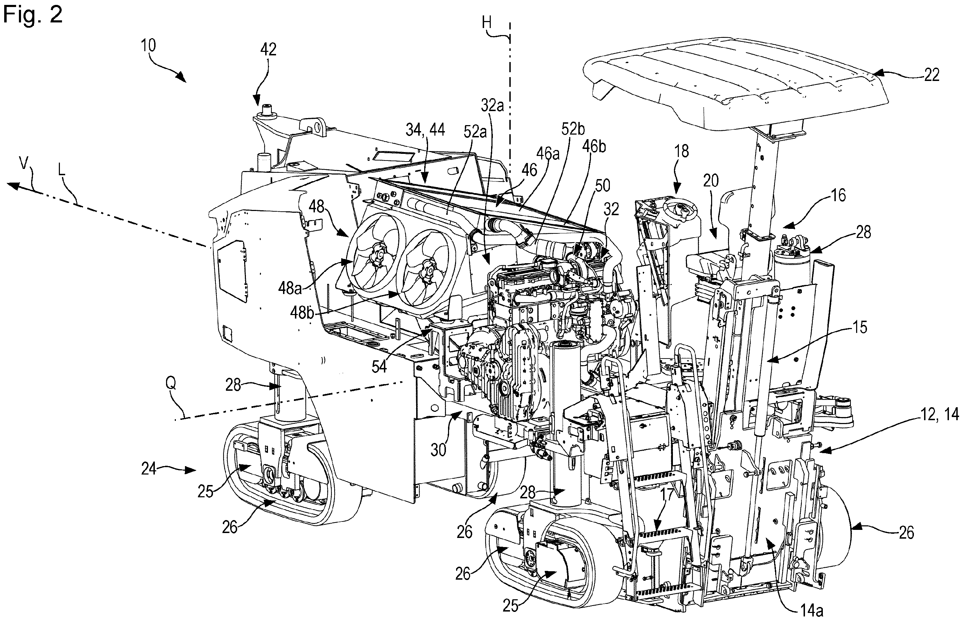

In den Figuren 1 und 2 ist eine Straßenkaltfräse in lediglich beispielhafter Gestalt einer Kompaktfräse perspektivisch von schräg hinten dargestellt und allgemein mit 10 bezeichnet. Bei der konkret dargestellten Kompaktfräse befindet sich die Arbeitsvorrichtung 12 in einem Fräswalzenkasten 14 im Heckbereich der Straßenkaltfräse 10, etwa unter einem in Vorwärtsfahrtrichtung asymmetrisch zur rechten Maschinenseite versetzt angeordneten Fahrstand 16, welcher über eine Leiter 17 am Maschinenheck erreichbar ist und von welchem aus der Betrieb der Straßenkaltfräse 10 von einem Maschinenführer gesteuert werden kann. Man erkennt am Heck der Straßenkaltfräse 10 ein über einen Kolben-Zylinder-Aktuator 15 anhebbares und absenkbares Abstreiferschild 14a, welches die Rückwand des Fräswalzenkastens 14 bildet.

Der Maschinenführer kann zur Bedienung eines Bedienpults 18 auf einem Fahrersitz 20 sitzen und ist dabei durch ein längs der Maschinenhöhenachse H der Straßenkaltfräse 10 verlagerbares Schutzdach 22 vor Niederschlag und Sonneneinstrahlung geschützt.

Die Straßenkaltfräse 10 steht mit einem Fahrwerk 24, welches im dargestellten Beispiel vier Kettenlaufwerke 26 umfasst, auf einem der besseren Übersichtlichkeit wegen nur symbolhaft in Fig. 1 dargestellten Untergrund U auf. Der Untergrund U kann durch die Arbeitsvorrichtung 12 abtragend bearbeitet werden. Statt Kettenlaufwerke 26 können auch Radlaufwerke vorgesehen sein. In jedem Fall verläuft eine Umlaufachse, um welche das Umlaufbauteil des jeweiligen Laufwerks umläuft, sei es nun Kette oder Rad, parallel zur Oberfläche des Untergrunds U, sodass die Laufwerke, hier: Kettenlaufwerke 26, im Fahrbetrieb der Straßenkaltfräse 10 auf dem Untergrund U abrollen können.

Mit der im dargestellten Anwendungsbeispiel im Fräswalzenkasten 14 aufgenommenen Fräswalze als der Arbeitsvorrichtung 12, welche um eine zur Maschinenquerrichtung Q parallele Drehachse rotiert, kann Material von dem zu bearbeitenden Boden abgetragen werden. Das Fahrwerk 24 mit den im dargestellten Ausführungsbeispiel jeweils individuell über Hydraulikmotoren 25 angetriebenen lenkbaren Kettenlaufwerken 26 sorgt für den Vortrieb der Straßenkaltfräse 10 und somit insbesondere während einer abtragenden Bodenbearbeitung für den Vorschub der Arbeitsvorrichtung 12.

Das Fahrwerk 24 trägt über Hubsäulen 28 höhenveränderlich, also längs der Maschinenhöhenachse H verlagerbar, einen Maschinenrahmen 30 (siehe Figur 2), welcher Funktionsvorrichtungen der Straßenkaltfräse 10 trägt. Zu den Funktionsvorrichtungen zählen die schon erwähnte Arbeitsvorrichtung 12 mitsamt dem Fräswalzenkasten 14, das Bedienpult 18, die Hydraulikmotoren 25, eine Diesel-Brennkraftmaschine 32 (siehe Figur 2) als Leistungsquelle im Sinne der Beschreibungseinleitung, eine Kühlvorrichtung 34 (siehe Figur 2), eine Abdeckung 36, um nur einige Beispiele von Funktionsvorrichtungen zu nennen.

Die Brennkraftmaschine 32 ist von einem luftgefüllten Lüftungsvolumen 32a umgeben, deren Luft durch die Brennkraftmaschine 32 während ihres Betriebs aufgrund von Konvektion und Strahlung erwärmt wird.

In Figur 1 sind an der Abdeckung 36 ein Ansaug-Öffnungsbereich 38 und ein Ausblas-Öffnungsbereich 40 ausgebildet, in welchen die Abdeckung 36 von Öffnungen durchbrochen ist, um einen Durchgang von Luft zwischen einer äußeren Seite der Abdeckung 36 und einer entgegengesetzten inneren Seite zu ermöglichen. Durch die Öffnungen des Ansaug-Öffnungsbereichs 38 kann die Kühlvorrichtung 34 Luft aus der Außenumgebung der Straßenkaltfräse 10 ansaugen, welche sie nach Durchgang durch die Kühlvorrichtung 34 durch die Öffnungen des Ausblas-Öffnungsbereichs 40 wieder in die Außenumgebung der Straßenkaltfräse 10 zurück fördert. Das Ansaugen erfolgt bzw. der Ansaug-Öffnungsbereich 38 befindet sich überwiegend auf der Oberseite der Abdeckung 36 und auf deren in Vorwärtsfahrtrichtung V rechten Maschinenseite. Das Ausblasen erfolgt bzw. der Ausblas-Öffnungsbereich 40 befindet sich überwiegend oder sogar vollständig auf der in Maschinenquerrichtung Q entgegengesetzten, in Vorwärtsfahrtrichtung V linken Maschinenseite.

Lediglich der Vollständigkeit halber sei angemerkt, dass sich an der in Maschinenlängsrichtung L dem Maschinenheck entgegengesetzten Vorderseite der Straßenkaltfräse 10 eine vom Maschinenrahmen 30 getragene Lagerformation 42 zur Lagerung einer nicht dargestellten, während einer Bodenbearbeitung jedoch vorhandenen Materialtransportvorrichtung zur Verladung des Fräsgutes, insbesondere eines Transportbandes, befindet.

Wie in Figur 2 bei abgenommener Abdeckung 36 erkennbar ist, umfasst die als vormontierte Luftstrom-Baugruppe 44 ausgebildete Kühlvorrichtung 34 eine Wärmetauscheranordnung 46 sowie eine Lüfteranordnung 48 mit zwei beispielhaft nebeneinander angeordneten Lüftern 48a und 48b. Die Lüfteranordnung 48 kann abweichend von dem dargestellten Beispiel nur einen Lüfter oder mehr als zwei Lüfter aufweisen und die Mehrzahl von Lüftern kann in anderen räumlichen Beziehungen zueinander angeordnet sein, beispielsweise übereinander oder diagonal zueinander versetzt.

Ebenso weist die Wärmetauscheranordnung 46 einen ersten Wärmetauscher 46a auf, welcher von einem Kühlmedium der Brennkraftmaschine 32 durchströmt wird, um im Wärmetauscher 46a Wärme, welche es zuvor in der Brennkraftmaschine 32 aufgenommen hat, an die den Wärmetauscher 46a passierende Luft abzugeben. Weiter weist die Wärmetauscheranordnung 46 einen zweiten Wärmetauscher 46b auf, welcher als Ladeluftkühler für einen mit der Brennkraftmaschine 32 kooperierenden Turbolader 50 dient. Während also das den Wärmetauscher 46a durchströmende Kühlmedium flüssig ist, ist das den Wärmetauscher 46b durchströmende Kühlmedium gasförmig. Die Wärmetauscheranordnung 46 kann mehr oder weniger als die gezeigten zwei Wärmetauscher 46a und 46b aufweisen. Beispielsweise kann ein weiterer Wärmetauscher in der Wärmetauscheranordnung 46 als Hydraulikölkühler dienen und von dem durch die Hydraulikmotoren 25 strömenden Hydrauliköl als Kühlmedium durchströmt werden. Mit dem Hydrauliköl können so auch die Hydraulikmotoren 25 gekühlt werden.

Die zwei Wärmetauscher 46a und 46b können in einer anderen als der dargestellten räumlichen Beziehung zueinander angeordnet sein, also beispielsweise längs der Maschinenlängsachse L nebeneinander, anstelle, wie dargestellt, hintereinander. Anstelle eines Gas-Gas-Ladeluftkühlers kann die Wärmetauscheranordnung 46 einen Gas-Flüssigkeit-Wärmetauscher als Teil eines Ladeluft-Kühlungssystems aufweisen, wobei dann die Ladeluft Wärme an ein flüssiges Kühlmedium überträgt, welches die Wärme an die die Wärmetauscheranordnung 46 passierende Luft gibt.

Zu erkennen ist in Figur 2 die das flüssige Kühlmedium der Brennkraftmaschine 32 zum Wärmetauscher 46a fördernde erste Kühlmedienleitung 52a und die das gasförmige Kühlmedium zum Wärmetauscher 46b fördernde zweite Kühlmedienleitung 52b.

Die Luftstrom-Baugruppe 44 ist über eine Mehrzahl, im dargestellten Beispiel insgesamt vier, von maschinenrahmenfesten Lagerformationen 54 unmittelbar am Maschinenrahmen 30 gelagert.

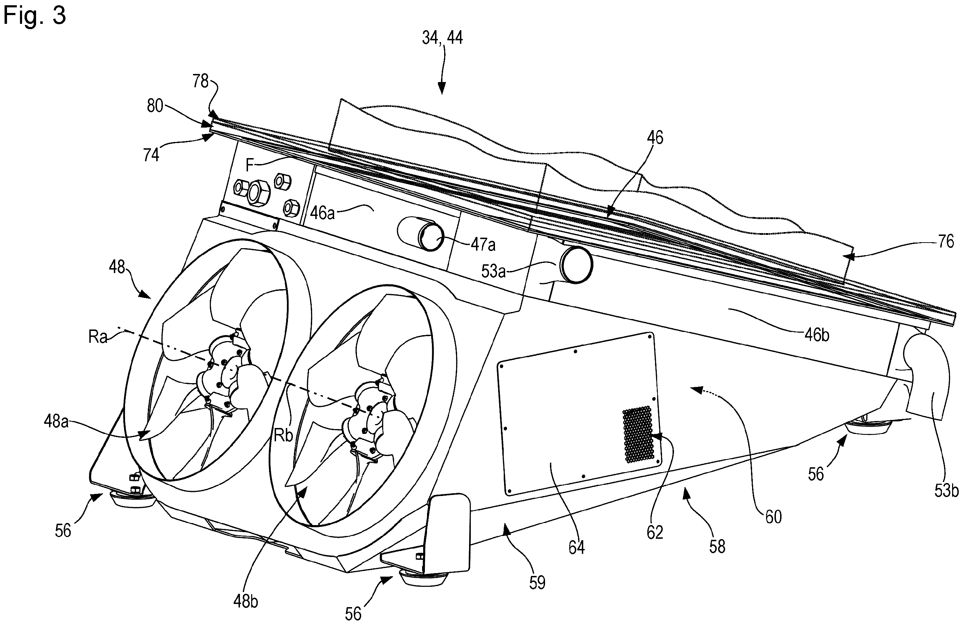

Nachfolgend wird unter Bezugnahme auf Figur 3 die Luftstrom-Baugruppe 44 näher erläutert werden.

Die Luftstrom-Baugruppe 44 ist über insgesamt vier Gegenlagerformationen 56, von welchen in Figur 3 nur drei zu erkennen sind, an den Lagerformationen 54 des Maschinenrahmens 30 festgelegt. Die Gegenlagerformationen 56 sind an einem aus einem flächigen Material, wie beispielsweise Blech, gefertigten Rahmen 58 festgelegt, beispielsweise durch Schweißen. Der Rahmen 58 trägt die Wärmetauscheranordnung 46 und ebenso die Lüfteranordnung 48.

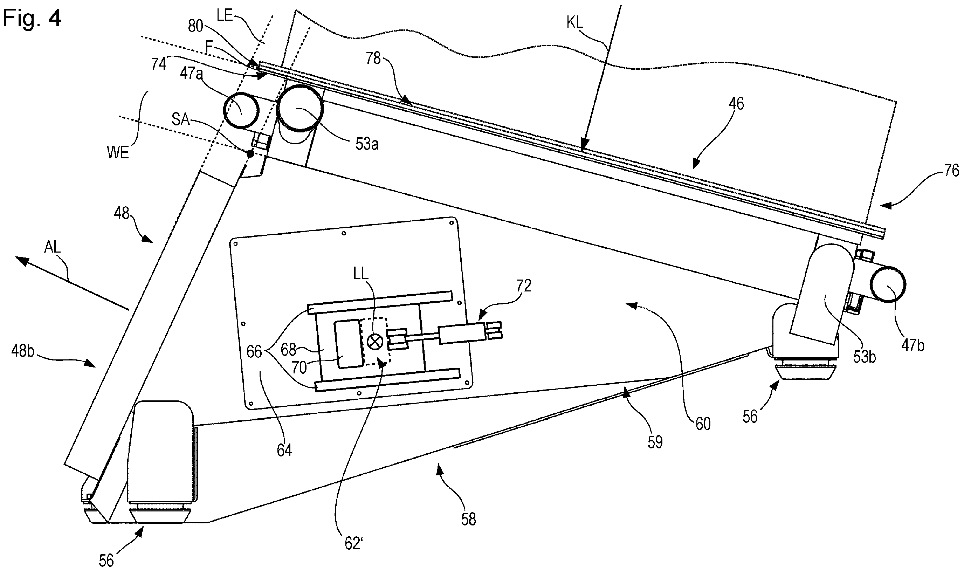

Zu erkennen ist in Figur 3 auch der Zulaufanschluss 47a des Kühlmediums in den Wärmetauscher 46a. Der Rücklaufanschluss 47b nach Durchgang des Kühlmediums durch den Wärmetauscher 46a befindet sich auf der entgegengesetzten Seite des Wärmetauschers 46a und ist nicht in Figur 3, sondern in Figur 4 zu erkennen.

Ebenso sind in Figur 3 der Zulaufanschluss 53a der Ladeluft in den Wärmetauscher 46b und der Rücklaufanschluss 53b der Ladeluft nach Durchgang durch den Wärmetauscher 46b zu erkennen.

Der gehäuseartige Rahmen 58 umschließt mit einem Gehäuseabschnitt 59 ein Mischvolumen 60 zwischen der Wärmetauscheranordnung 46 und der Lüfteranordnung 48. Die vormontierte Luftstrom-Baugruppe 44 hat eine grob prismatische Gestalt mit im Wesentlichen dreieckiger Grundfläche. Zwei Mantelflächen des Dreiecksprismas sind durch die Wärmetauscheranordnung 46 einerseits und durch die Lüfteranordnung 48 gebildet. Eine dritte Mantelfläche bildet eine Unterseite des Gehäuseabschnitts 59 und somit eine Begrenzungswand des Mischvolumens 60. In der auf den Betrachter von Figur 3 und Figur 4 zuweisenden Stirnseite des Gehäuseabschnitts 59 des Rahmens 58 ist eine Durchgangsöffnung 62 ausgebildet, durch welche hindurch das Mischvolumen 60 von außen, und zwar, wie Figur 2 zeigt, von der Umgebung der Brennkraftmaschine 32, genauer vom Lüftungsvolumen 32a, zugänglich ist.

Die Durchgangsöffnung 62 ist in einer an die übrige Stirnfläche des Gehäuseabschnitts 59 anmontierte Platte 64 ausgebildet, welche einen Durchlass bedeckt, der die die Platte 64 tragende Stirnseite des Gehäuseabschnitt 59 durchsetzt. Auf diese Weise kann ein Durchlass gleichsam als Ur-Durchgangsöffnung mit maximalem Durchgangsquerschnitt bereitgestellt werden, welcher durch Anordnung der Platte 64 mit für den jeweiligen Anwendungsfall hinsichtlich Gestalt, Lage und Durchlassquerschnitt optimierter Durchgangsöffnung 62 an den jeweiligen Anwendungsfall der konkreten Bodenbearbeitungsmaschine angepasst werden kann.

Im dargestellten Ausführungsbeispiel ist die Durchgangsöffnung 62 durch eine Vielzahl kleinerer Elementaröffnungen gebildet, beispielsweise ausgeführt als die Platte 64 durchsetzende Bohrungen, welche in ihrer Gesamtheit die Durchgangsöffnung 62 bilden. Die Durchgangsöffnung 62 ist außerdem in der Platte 64 näher bei einer Ecke als bei den übrigen drei Ecken ausgebildet, um einen Lüftungs-Luftstrom aus einem hierfür möglichst optimalen Bereich des Lüftungsvolumens 32a um die Brennkraftmaschine 32 abzusaugen. Die Durchgangsöffnung 62 kann abweichend von der Darstellung durch eine einzige Öffnung oder durch eine geringere Mehrzahl von Öffnungen gebildet sein. Sie kann außerdem an einem anderen Ort in der Platte 64 ausgebildet sein.

Wie in Figur 3 außerdem gezeigt ist, sind die beiden Lüfter 48a und 48b im Wesentlichen identisch und mit zueinander parallelen Rotationsachsen Ra und Rb angeordnet. Die Lüfterräder der Lüfter 48a und 48b sind bevorzugt hydraulisch oder auch elektromotorisch angetrieben, wobei weiter bevorzugt jeder Lüfter 48a und 48b gesondert vom jeweils anderen steuerbar oder regelbar ist.

In der Draufsicht auf die Stirnfläche des Gehäuseabschnitts 59 des Rahmens 58, welche in Figur 4 dargestellt ist, ist gut zu erkennen, dass die Wärmetauscheranordnung 46 als ebene Wärmetauscheranordnung im Wesentlichen in einer zur Zeichenebene der Figur 4 orthogonalen Wärmetauscherebene WE angeordnet ist und dass die Lüfteranordnung 48 als ebene Lüfteranordnung im Wesentlichen in einer zur Zeichenebene der Figur 4 ebenfalls orthogonalen Lüfterebene LE angeordnet ist. Die Wärmetauscherebene WE und die Lüfterebene LE schließen im dargestellten Beispiel einen Winkel von zwischen 100° und 110° ein. Sie sind bezüglich einer orthogonal zur Zeichenebene der Figur 4 verlaufenden Schwenkachse SA relativ zueinander verschwenkt und bilden einen First F mit zur Schwenkachse SA und zur Maschinenlängsachse L paralleler Firstlinie. Vorliegend ist der First F von einer in Maschinenhöhenrichtung H obersten Kante eines Anlagerahmens 74 gebildet. Der Anlagerahmen 74 umgibt eine vom Kühl-Luftstrom KL zur Wärmeübertragung durchströmbare Fläche der Wärmetauscheranordnung 46. Der Anlagerahmen 74 läuft im dargestellten Beispiel vollständig geschlossen um die durchströmbare Fläche der Wärmetauscheranordnung 46 um.

Die Wärmetauscherebene WE und die Lüfterebene LE sind dabei keine unendlich dünnen Ebenen im mathematischen Sinne sondern sind Bauteilebenen, welche in ihrer jeweiligen Dickenrichtung eine wesentlich kleinere Abmessung aufweisen als in ihren beiden sowohl zur Dickenrichtung als auch zueinander orthogonalen Erstreckungsrichtungen.

Im Unterschied zu Figur 3 ist die in der Platte 64 ausgebildet Durchgangsöffnung 62' in Figur 4 als eine einzige zusammenhängende Durchgangsöffnung 62' ausgebildet, die allerdings von einer längs zweier Schienen 66 verschieblichen Blende 68 verdeckt ist. Die Blende 68 weist selbst wiederum eine sie durchsetzende Blendenöffnung 70 auf, welche durch Verschiebung der Blende 68 längs der Schienen 66 in Überlappung mit der Durchgangsöffnung 62' gebracht werden kann. Dadurch kann der durchströmbare Querschnitt der Durchgangsöffnung 62' verändert werden. Die Blende 68 ist durch einen Aktuator 72 verschieblich zwischen der in Figur 4 gezeigten Verschlussstellung, in welcher die Blende 68 die Durchgangsöffnung 62' vollständig verschließt und einer Öffnungsstellung, in welcher die Blendenöffnung 70 und die Durchgangsöffnung 62' vollständig überlappen. Das Anfahren von Zwischenstellungen ist bevorzugt möglich. Allerdings kann auch vorgesehen sein, die Durchgangsöffnung 62' durch Bewegung der Blende 68 nur entweder vollständig zu öffnen oder vollständig zu verschließen.

Die Lüfteranordnung 48 ist derart an der Kühlvorrichtung 34 bzw. an der Luftstrom-Baugruppe 44 vorgesehen, dass die Wärmetauscheranordnung 46 und die Durchgangsöffnung 62 bzw. 62' auf der Saugseite der Lüfteranordnung 48 gelegen sind. Durch Betrieb der Lüfteranordnung 48 wird daher auf der Saugseite der Lüfteranordnung 48 ein Unterdruck bezüglich der Umgebungsatmosphäre erzeugt, was einen Kühl-Luftstrom KL von außen durch die Wärmetauscheranordnung 46 hindurch in das Mischvolumen 60 hinein erzeugt. Ebenso erzeugt der Unterdruck bei geöffneter Durchgangsöffnung 62 bzw. 62' einen zur Zeichenebene von Fig. 4 orthogonalen Lüftungs-Luftstrom LL von außen durch die Durchgangsöffnung 62 bzw. 62' in das Mischvolumen 60 hinein, wo sich der Kühl-Luftstrom KL und aus dem Bereich der Brennkraftmaschine 32 kommende der Lüftungs-Luftstrom LL vermischen können. Der von der Lüfteranordnung 48 erzeugte Druckunterschied zwischen ihrer Saugseite und ihrer Druckseite bewirkt außerdem einen Abluft-Luftstrom AL aus dem Mischvolumen 60 hinaus durch die Lüfteranordnung 48 hindurch.

Die durch die zugeordneten Pfeile angegebenen Strömungsrichtungen von Kühl-Luftstrom KL und Abluft-Luftstrom AL, welche der jeweiligen Dickenrichtung der durchströmten Anordnung entspricht, liegen bevorzugt in einer Ebene. Diese ist wiederum bevorzugt zwischen 75° und 105° zur Maschinenlängsrichtung L geneigt, insbesondere orthogonal zu dieser. Die Strömungsrichtung des Lüftungs-Luftstroms LL durch die Durchgangsöffnung 62 bzw. 62' hindurch verläuft quer zu der von den Strömungsrichtungen des Kühl-Luftstroms KL und des Abluft-Luftstroms AL aufgespannten Ebene, insbesondere orthogonal zu dieser.

Dadurch wird sichergestellt, dass keine zuvor durch die Aufnahme von Wärme an der Wärmetauscheranordnung 46 erwärmte Luft in den Bereich der Brennkraftmaschine 32 gelangt und die Umgebung um die Brennkraftmaschine 32 herum weiter erwärmt oder ihre Kühlung verhindert. Ebenso wird sichergestellt, dass keine durch die Brennkraftmaschine 32 erwärmte Luft durch die Wärmetauscheranordnung 46 strömt und dort die Effizienz der konvektiven Kühlung des die Wärmetauscheranordnung 46 durchströmenden Kühlmediums verringert.

In den Figuren 3 und 4 ist strichliniert eine Schachtwandung 76 als Trennvorrichtung gezeigt, welche sich im betriebsbereiten Zustand der Bodenbearbeitungsmaschine 10 von der Abdeckung 36 bis zur Wärmetauscheranordnung 46 erstreckt. Der Pfeil KL in Figur 4 symbolisiert auch einen Strömungsweg, längs welchem der Kühl-Luftstrom KL von den Öffnungen 38 in der Abdeckung 36 zur Wärmetauscheranordnung 46 und weiter durch diese hindurch strömt. Dieser Strömungsweg befindet sich innerhalb der Schachtwandung 76 in einem durch die Schachtwandung 76 definierten und von deren Außenumgebung abgegrenzten Strömungskanal.

An seinem der Wärmetauscheranordnung 46 zugewandten Längsende weist die Schachtwandung 76 bevorzugt einen Gegenanlagerahmen 78 auf, welcher im betriebsbereiten Zustand der Bodenbearbeitungsmaschine 10 dem Anlagerahmen 74 unter Zwischenanordnung einer Dichtung 80 gegenüberliegt. Die, vorzugsweise elastomere, Dichtung 80 kann fest mit dem Anlagerahmen 76 oder mit der Schachtwandung 76, insbesondere mit dem Gegenanlagerahmen 78, fest verbunden sein.

## Patentansprüche

1. Selbstfahrende Bodenbearbeitungsmaschine (10), wie etwa Straßenfräse (10), Surface-Miner oder Stabilisierer, umfassend:
- ein Fahrwerk (24), vermittels welchem die Bodenbearbeitungsmaschine (10) abrollbar auf einem Untergrund (U) aufsteht, und
- einen vom Fahrwerk (24) getragenen Maschinenrahmen (30),
- eine am Maschinenrahmen (30) aufgenommene Leistungsquelle (32) zur Bereitstellung von Leistung, welche für einen Fahrbetrieb oder/und für einen Bodenbearbeitungsbetrieb der Bodenbearbeitungsmaschine (10) nutzbar ist,
- eine an dem Maschinenrahmen (30) aufgenommene Arbeitsvorrichtung (12) zur Bodenbearbeitung,
- eine Kühlvorrichtung (34) zur Kühlung wenigstens einer Funktionsvorrichtung (25, 32) der Bodenbearbeitungsmaschine (10), wobei die Kühlvorrichtung (34) umfasst:
- wenigstens eine Wärmetauscheranordnung (46), umfassend wenigstens einen Wärmetauscher (46a, 46b), welcher zur Übertragung von Wärme von einem Kühlmedium an Luft ausgebildet ist, und
- eine Lüfteranordnung (48), welche einerseits dazu ausgebildet und angeordnet ist, einen die Wärmetauscheranordnung (46) passierenden Kühl-Luftstrom (KL) zu erzeugen und welche andererseits dazu ausgebildet und angeordnet ist, im Bereich der Leistungsquelle (32) einen von der Leistungsquelle (32) weg strömenden Lüftungs-Luftstrom (LL) zu erzeugen,
wobei die Wärmetauscheranordnung (46) und ein Lüftungsvolumen (32a), in welchem der Lüftungs-Luftstrom (LL) von der Leistungsquelle (32) weg strömt, auf der Saugseite der Lüfteranordnung (48) angeordnet sind, **dadurch gekennzeichnet, dass** das Lüftungsvolumen (32a) bezogen auf den Kühl-Luftstrom (KL) stromabwärts der Wärmetauscheranordnung (46) angeordnet ist, so dass der durch die Lüfteranordnung (48) erzeugte Lüftungs-Luftstrom (LL) stromabwärts der Wärmetauscheranordnung (46) und stromaufwärts der Lüfteranordnung (48) auf den Kühl-Luftstrom (KL) trifft.

2. Selbstfahrende Bodenbearbeitungsmaschine (10) nach Anspruch 1,
**dadurch gekennzeichnet, dass** zwischen der Wärmetauscheranordnung (46) und der Lüfteranordnung (48) ein Mischvolumen (60) vorgesehen ist, in welchem sich der Kühl-Luftstrom (KL) und der Lüftungs-Luftstrom (LL) vermischen.

3. Selbstfahrende Bodenbearbeitungsmaschine (10) nach Anspruch 1 oder 2,
**dadurch gekennzeichnet, dass** die Bodenbearbeitungsmaschine (10) eine vormontierte Luftstrom-Baugruppe (44) aufweist, wobei die Luftstrom-Baugruppe (44) wenigstens die Lüfteranordnung (48), die Wärmetauscheranordnung (46) und einen den wenigstens einen Lüfter (48a, 48b) und die Wärmetauscheranordnung (46) tragenden Rahmen (58) aufweist.

4. Selbstfahrende Bodenbearbeitungsmaschine (10) nach den Ansprüchen 2 und 3,
**dadurch gekennzeichnet, dass** der Rahmen (58) einen das Mischvolumen (60) wenigstens teilweise einfassenden Gehäuseabschnitt (59) aufweist.

5. Selbstfahrende Bodenbearbeitungsmaschine (10) nach einem der Ansprüche 3 oder 4,
**dadurch gekennzeichnet, dass** die Lüfteranordnung (48) und die Wärmetauscheranordnung (46) relativ zueinander um eine Schwenkachse (SA) rotatorisch verlagert oder/und längs einer Verlagerungsachse translatorisch verlagert angeordnet sind.

6. Selbstfahrende Bodenbearbeitungsmaschine (10) nach einem der Ansprüche 3 bis 5,
**dadurch gekennzeichnet, dass** die Lüfteranordnung (48) eine im Wesentlichen ebene Lüfteranordnung (48) ist oder/und dass die Wärmetauscheranordnung (46) eine im Wesentlichen ebene Wärmetauscheranordnung (46) ist.

7. Selbstfahrende Bodenbearbeitungsmaschine (10) nach einem der vorhergehenden Ansprüche, unter Einbeziehung des Anspruchs 2,
**dadurch gekennzeichnet, dass** der Lüftungs-Luftstrom (LL) quer zur Strömungsrichtung des die Wärmetauscheranordnung (46) passierenden Kühl-Luftstroms (KL) oder/und quer zu einem die Lüfteranordnung (48) durchströmenden Abluft-Luftstrom (AL) zum Mischvolumen (60) hin strömt.

8. Selbstfahrende Bodenbearbeitungsmaschine (10) nach einem der Ansprüche 4 bis 7, unter Einbeziehung des Anspruchs 4,
**dadurch gekennzeichnet, dass** der das Mischvolumen (60) wenigstens teilweise einfassende Gehäuseabschnitt (59) des Rahmens (58) eine mit Abstand sowohl von der Wärmetauscheranordnung (46) als auch von der Lüfteranordnung (48) gelegene Durchgangsöffnung (62; 62') aufweist, welche vom Lüftungs-Luftstrom (LL) durchströmbar ist.

9. Selbstfahrende Bodenbearbeitungsmaschine (10) nach Anspruch 8,
**dadurch gekennzeichnet, dass** eine vom Lüftungs-Luftstrom (LL) durchströmbare Querschnittsfläche der Durchgangsöffnung (62; 62') zur Veränderung der unter gegebenen Betriebsbedingungen pro Zeiteinheit im Lüftungs-Luftstrom (LL) strömenden Lüftungs-Luftmenge veränderbar ist.

10. Selbstfahrende Bodenbearbeitungsmaschine (10) nach einem der vorhergehenden Ansprüche,
**dadurch gekennzeichnet, dass** die Wärmetauscheranordnung (46) eine Mehrzahl von Wärmetauschern (46a, 46b) aufweist, welche Bestandteile unterschiedlicher Kühlkreisläufe (52a) oder/und Kühldurchläufe (52b) sind, oder/und dass die Lüfteranordnung (48) eine Mehrzahl von Lüftern (48a, 48b) aufweist.

11. Selbstfahrende Bodenbearbeitungsmaschine (10) nach einem der vorhergehenden Ansprüche,
**dadurch gekennzeichnet, dass** die Bodenbearbeitungsmaschine (10) einen Fahrstand (16) aufweist, wobei die Wärmetauscheranordnung (46) und die Lüfteranordnung (48) zwischen dem Fahrstand (16) und dem vorderen Längsende der Bodenbearbeitungsmaschine (10) angeordnet ist.

12. Selbstfahrende Bodenbearbeitungsmaschine (10) nach einem der vorhergehenden Ansprüche,
**dadurch gekennzeichnet, dass** die Wärmetauscheranordnung (46) und die Lüfteranordnung (48) der Leistungsquelle (32) unmittelbar benachbart angeordnet sind.

13. Selbstfahrende Bodenbearbeitungsmaschine (10) nach einem der vorhergehenden Ansprüche,
**dadurch gekennzeichnet, dass** die Wärmetauscheranordnung (46) in Maschinenquerrichtung näher bei einer Maschinenseite gelegen ist und die Lüfteranordnung (48) näher bei der in Maschinenquerrichtung (Q) entgegengesetzten anderen Maschinenseite gelegen ist.

14. Selbstfahrende Bodenbearbeitungsmaschine (10) nach einem der vorhergehenden Ansprüche,
**dadurch gekennzeichnet, dass** der die Wärmetauscheranordnung (46) passierende Kühl-Luftstrom (KL) eine Strömungskomponente in Maschinenquerrichtung (Q) und eine Strömungskomponente in Maschinenhöhenrichtung (H) aufweist oder/und dass ein die Lüfteranordnung (48) durchströmender Abluft-Luftstrom (AL) eine Strömungskomponente in Maschinenquerrichtung (Q) und eine Strömungskomponente in Maschinenhöhenrichtung (H) aufweist.

15. Selbstfahrende Bodenbearbeitungsmaschine (10) nach einem der vorhergehenden Ansprüche,
**dadurch gekennzeichnet, dass** die Wärmetauscheranordnung (46) oder/und die Lüfteranordnung (48) oder/und die Leistungsquelle (32) durch eine Abdeckung (36) abgedeckt sind.

## Claims

1. A self-propelled earth working machine (10), such as for example a road milling machine (10), surface miner or stabilizer, comprising:
- a traveling gear (24), by which the earth working machine (10) stands on a subsurface (U) in rollable fashion, and
- a machine frame (24) supported by the traveling gear (30),
- a power source (32) accommodated on the machine frame (30) for providing power, which is usable for a travel operation and/or for an earth working operation of the earth working machine (10),
- a working apparatus (12) for earth working accommodated on the machine frame (30),
- a cooling device (34) for cooling at least one functional device (25, 32) of the earth working machine (10), the cooling device (34) comprising:
- at least one heat exchanger system (46), comprising at least one heat exchanger (46a, 46b), which is designed to transfer heat from a cooling medium to air, and
- a ventilator system (48), which is on the one hand designed and situated to produce a cooling air flow (KL) passing the heat exchanger system (46) and which is on the other hand designed and situated to produce in the area of the power source (32) a ventilation air flow (LL) flowing away from the power source (32),
wherein the heat exchanger system (46) and a ventilation volume (32a), in which the ventilation air flow (LL) flows away from the power source (32), are situated on the suction side of the ventilator system (48),
**characterized in that** the ventilation volume (32a) is situated downstream of the heat exchanger system (46) relative to the cooling air flow (KL), so that the ventilation air flow (LL) generated by the ventilator system (48) meets the cooling air flow (KL) downstream of the heat exchanger system (46) and upstream of the ventilator system (48).

2. The self-propelled earth working machine (10) as recited in Claim 1,
**characterized in that** between the heat exchanger system (46) and the ventilator system (48) a mixing volume (60) is provided, in which the cooling air flow (KL) and the ventilation air flow (LL) mix.

3. The self-propelled earth working machine (10) as recited in Claim 1 or 2,
**characterized in that** the earth working machine (10) includes a preassembled air flow assembly (44), the air flow assembly (44) including at least the ventilator system (48), the heat exchanger system (46) and a frame (58) supporting the at least one ventilator (48a, 48b) and the heat exchanger system (46).

4. The self-propelled earth working machine (10) as recited in Claims 2 and 3,
**characterized in that** the frame (58) includes a housing section (59) enclosing the mixing volume (60) at least partially.

5. The self-propelled earth working machine (10) as recited in one of Claims 3 or 4,
**characterized in that** the ventilator system (48) and the heat exchanger system (46) are rotationally displaced relative to each other about a pivot axis (SA) and/or are displaced in translatory fashion along a displacement axis.

6. The self-propelled earth working machine (10) as recited in one of Claims 3 through 5,
**characterized in that** the ventilator system (48) is an essentially plane ventilator system (48) and/or the heat exchanger system (46) is an essentially plane heat exchanger system (46).

7. The self-propelled earth working machine (10) as recited in one of the preceding claims, with the inclusion of Claim 2,
**characterized in that** the ventilation air flow (LL) flows transversely to the direction of flow of the cooling air flow (KL) passing the heat exchanger system (46) and/or flows transversely to an exhaust air flow (AL) flowing through the ventilator system (48) to the mixing volume (60).

8. The self-propelled earth working machine (10) as recited in one of Claims 4 through 7, with the inclusion of Claim 4,
**characterized in that** the housing section (59) of the frame (58) enclosing the mixing volume (60) at least partially has a through-hole (62; 62') situated at a distance both from the heat exchanger system (46) as well as from the ventilator system (48), through which the ventilation air flow (LL) is able to flow.

9. The self-propelled earth working machine (10) as recited in Claim 8,
**characterized in that** a cross sectional area of the through-hole (62; 62'), through which the ventilation air flow (LL) is able to flow, is variable for varying the ventilation air quantity flowing under given operating conditions per unit of time in the ventilation air flow (LL).

10. The self-propelled earth working machine (10) as recited in one of the preceding claims,
**characterized in that** the heat exchanger system (46) includes a plurality of heat exchangers (46a, 46b), which are components of different cooling circuits (52a) and/or cooling cycles (52b), and/or the ventilator system (48) includes a plurality of ventilators (48a, 48b).

11. The self-propelled earth working machine (10) as recited in one of the preceding claims,
**characterized in that** the earth working machine (10) includes an operator's platform, the heat exchanger system (46) and the ventilator system (48) being situated between the operator's platform and the front longitudinal end of the earth working machine (10).

12. The self-propelled earth working machine (10) as recited in one of the preceding claims,
**characterized in that** the heat exchanger system (46) and the ventilator system (48) are situated directly adjacent to the power source (32).

13. The self-propelled earth working machine (10) as recited in one of the preceding claims,
**characterized in that** the heat exchanger system (46) in the transverse direction is situated closer to one side of the machine and the ventilator system (48) is situated closer to the opposite other side of the machine in the transverse direction (Q) of the machine.

14. The self-propelled earth working machine (10) as recited in one of the preceding claims,
**characterized in that** the cooling air flow (KL) passing the heat exchanger system (46) has a flow component in the transverse direction (Q) of the machine and a flow component in the vertical direction (H) of the machine and/or an exhaust air flow (AL) flowing through the ventilator system (48) has a flow component in the transverse direction (Q) of the machine and a flow component in the vertical direction (H) of the machine.

15. The self-propelled earth working machine (10) as recited in one of the preceding claims,
**characterized in that** the heat exchanger system (46) and/or the ventilator system (48) and/or the power source (32) are covered by a cover (36).

## Revendications

1. Machine automotrice de travail du sol (10), telle qu'une fraiseuse routière (10), un Surface Miner ou un stabilisateur, comprenant :
- un train de roulement (24), au moyen duquel la machine de travail du sol (10) repose sur un sol (U) de manière à pouvoir rouler, et
- un châssis de machine (30) porté par le train de roulement (24),
- une source de puissance (32) logée sur le châssis de machine (30) pour fournir de la puissance qui peut être utilisée pour un mode de déplacement ou/et pour un mode de travail du sol de la machine de travail du sol (10),
- un dispositif de travail (12) pour le travail du sol, logé sur le châssis de la machine (30),
- un dispositif de refroidissement (34) pour refroidir au moins un dispositif fonctionnel (25, 32) de la machine de travail du sol (10), dans lequel le dispositif de refroidissement (34) comprend :
- au moins un agencement d'échangeur de chaleur (46), comprenant au moins un échangeur de chaleur (46a, 46b), qui est conçu pour transférer de la chaleur d'un médium de refroidissement à l'air, et
- un agencement de ventilateur (48) qui, d'une part, est conçu et disposé pour produire un courant d'air de refroidissement (KL) passant par l'agencement d'échangeur de chaleur (46) et qui, d'autre part, est conçu et disposé pour générer, dans la zone de la source de puissance (32), un courant d'air de ventilation (LL) s'écoulant à partir de la source de puissance (32),
dans lequel l'agencement d'échangeur de chaleur (46) et un volume d'aération (32a), dans lequel le courant d'air de ventilation (LL) s'écoule en s'éloignant de la source de puissance (32), sont disposés sur le côté aspiration de l'agencement de ventilateur (48),
**caractérisé en ce que** le volume de ventilation (32a) est disposé en aval de l'agencement d'échangeur de chaleur (46) par rapport au courant d'air de refroidissement (KL), de sorte que le courant d'air de ventilation (LL) généré par l'agencement de ventilateur (48) rencontre le courant d'air de refroidissement (KL) en aval de l'agencement d'échangeur de chaleur (46) et en amont de l'agencement de ventilateur (48).

2. Machine automotrice de travail du sol (10) selon la revendication 1,
**caractérisée en ce qu'**un volume de mélange (60) est prévu entre l'agencement d'échangeur de chaleur (46) et l'agencement de ventilateur (48), dans lequel le flux d'air de refroidissement (KL) et le flux d'air de ventilation (LL) se mélangent.

3. Machine automotrice de travail du sol (10) selon la revendication 1 ou 2,
**caractérisée en ce que** la machine de travail du sol (10) présente un module de flux d'air (44) prémonté, dans lequel le module de flux d'air (44) présente au moins l'agencement de ventilateur (48), l'agencement d'échangeur de chaleur (46) et un châssis (58) portant ledit au moins un ventilateur (48a, 48b) et l'agencement d'échangeur de chaleur (46).

4. Machine automotrice de travail du sol (10) selon les revendications 2 et 3,
**caractérisée en ce que** le châssis (58) présente une section de boîtier (59) entourant au moins partiellement le volume de mélange (60).

5. Machine automotrice de travail du sol (10) selon l'une des revendications 3 ou 4,
**caractérisée en ce que** l'agencement de ventilateur (48) et l'agencement d'échangeur de chaleur (46) sont disposés déplacés en rotation l'un par rapport à l'autre autour d'un axe de pivotement (SA) ou/et en translation le long d'un axe de déplacement.

6. Machine automotrice de travail du sol (10) selon l'une des revendications 3 à 5,
**caractérisée en ce que** l'agencement de ventilateur (48) est un agencement de ventilateur (48) sensiblement plan ou/et **en ce que** l'agencement d'échangeur de chaleur (46) est un agencement d'échangeur de chaleur (46) sensiblement plan.

7. Machine automotrice de travail du sol (10) selon l'une des revendications précédentes, en incluant la revendication 2,
**caractérisée en ce que** le flux d'air de ventilation (LL) s'écoule vers le volume de mélange (60) transversalement au sens d'écoulement du flux d'air de refroidissement (KL) traversant l'agencement d'échangeur de chaleur (46) ou/et transversalement à un flux d'air d'évacuation (AL) traversant l'agencement de ventilateur (48).

8. Machine automotrice de travail du sol (10) selon l'une des revendications 4 à 7, en incluant la revendication 4,
**caractérisée en ce que** la section de boîtier (59) du châssis (58) entourant au moins partiellement le volume de mélange (60) présente une ouverture de passage (62 ; 62') située à distance aussi bien de l'agencement d'échangeur de chaleur (46) que de l'agencement de ventilateur (48), laquelle peut être traversée par le flux d'air de ventilation (LL).

9. Machine automotrice de travail du sol (10) selon la revendication 8,
**caractérisée en ce qu'**une surface de section transversale de l'ouverture de passage (62 ; 62') pouvant être traversée par le flux d'air de ventilation (LL) peut être modifiée pour modifier la quantité d'air de ventilation s'écoulant dans le flux d'air de ventilation (LL) par unité de temps dans des conditions de fonctionnement données.

10. Machine automotrice de travail du sol (10) selon l'une des revendications précédentes,
**caractérisée en ce que** l'agencement d'échangeur de chaleur (46) comprend une pluralité d'échangeurs de chaleur (46a, 46b) qui sont des éléments de différents circuits de refroidissement (52a) ou/et de passages de refroidissement (52b), ou/et **en ce que** l'agencement de ventilateur (48) comprend une pluralité de ventilateurs (48a, 48b).

11. Machine automotrice de travail du sol (10) selon l'une des revendications précédentes,
**caractérisée en ce que** la machine de travail du sol (10) comprend un poste de conduite (16), dans lequel l'agencement d'échangeur de chaleur (46) et l'agencement de ventilateur (48) sont disposés entre le poste de conduite (16) et l'extrémité longitudinale avant de la machine de travail du sol (10).

12. Machine automotrice de travail du sol (10) selon l'une des revendications précédentes,
**caractérisée en ce que** l'agencement d'échangeur de chaleur (46) et l'agencement de ventilateur (48) sont disposés au voisinage immédiat de la source de puissance (32).

13. Machine automotrice de travail du sol (10) selon l'une des revendications précédentes,
**caractérisée en ce que** l'agencement d'échangeur de chaleur (46) est situé plus près d'un côté de la machine dans le sens transversal de la machine et l'agencement de ventilateur (48) est situé plus près de l'autre côté de la machine opposé dans le sens transversal (Q) de la machine.

14. Machine automotrice de travail du sol (10) selon l'une des revendications précédentes,
**caractérisée en ce que** le flux d'air de refroidissement (KL) traversant l'agencement d'échangeur de chaleur (46) présente une composante de flux dans le sens transversal de la machine (Q) et une composante de flux dans le sens de la hauteur de la machine (H) ou/et **en ce qu'**un flux d'air d'évacuation (AL) traversant l'agencement de ventilateur (48) présente une composante de flux dans le sens transversal de la machine (Q) et une composante de flux dans le sens de la hauteur de la machine (H).

15. Machine automotrice de travail du sol (10) selon l'une des revendications précédentes,
**caractérisée en ce que** l'agencement d'échangeur de chaleur (46) ou/et l'agencement de ventilateur (48) ou/et la source de puissance (32) sont recouverts par un recouvrement (36).
